# EUROPÄISCHE PATENTSCHRIFT

(11) **EP 1 234 399 B1**
(45) Veröffentlichungstag und Bekanntmachung des Hinweises auf die Patenterteilung: **26.05.2004**
(21) Anmeldenummer: 00993296.3
(22) Anmeldetag: 27.11.2000
(51) Int. Cl.: H04J 13/02

(54) **VERFAHREN UND EINRICHTUNG ZUR VERARBEITUNG EINES DIGITALEN DATENSIGNALS IN EINEM CDMA-FUNKSENDER**
METHOD AND DEVICE FOR PROCESSING A DIGITAL DATA SIGNAL IN A CDMA RADIO TRANSMITTER
PROCEDE ET DISPOSITIF POUR LE TRAITEMENT D'UN SIGNAL DE DONNEES NUMERIQUE DANS UN EMETTEUR RADIO AMRC

(30) Priorität: 30.11.1999 DE 19957535
(43) Veröffentlichungstag der Anmeldung: 28.08.2002
(73) Patentinhaber: Infineon Technologies AG, 81669 München (DE)
(72) Erfinder: DOETSCH, Markus, 56072 Koblenz-Rübenach (DE); JUNG, Peter, 67697 Otterberg (DE); KELLA, Tideya, 80337 München (DE); PLECHINGER, Jörg, 80469 München (DE); SCHMIDT, Peter, 67167 Erpolzheim (DE); SCHNEIDER, Michael, 81541 München (DE)
(74) Vertreter: Lange, Thomas, Dr.
(86) Internationale Anmeldenummer: PCT/DE2000/004236
(87) Internationale Veröffentlichungsnummer: WO 2001/041344

(56) Entgegenhaltungen:
- HE J ET AL: "A MAC PROTOCOL SUPPORTING WIRELESS VIDEO TRANSMISSION OVER MULTI-CODE CDMA PERSONAL COMMUNICATION NETWORKS" COMPUTER COMMUNICATIONS,GB,BUTTERWORTHS & CO. PUBLISHERS LTD, Bd. 21, Nr. 14, 15. September 1998 (1998-09-15), Seiten 1256-1268, XP004146585 ISSN: 0140-3664
- NIKULA E ET AL: "FRAMES MULTIPLE ACCESS FOR UMTS AND IMT-2000" IEEE PERSONAL COMMUNICATIONS,US,IEEE COMMUNICATIONS SOCIETY, Bd. 5, Nr. 2, 1. April 1998 (1998-04-01), Seiten 16-24, XP000751831 ISSN: 1070-9916
- WOODWORTH C B ET AL: "SPECTRALLY EFFICIENT UNIVERSAL TIME SLOTS USING TIME-FREQUENCY-CODESLICING" WIRELESS NETWORKS. CATCHING THE MOBILE FUTURE. IEEE INTERNATIONAL SYMPOSIUM ON PERSONAL, INDOOR AND MOBILE RADIO COMMUNICATIONS AND ICCC REGIONAL MEETING ON WIRELESS COMPUTER NETWORKS,XX,XX, Bd. 3, 1994, Seiten 1009-1013, XP000892997

## Beschreibung

Die Erfindung betrifft ein Verfahren und eine Einrichtung zur Verarbeitung eines digitalen Datensignals in einem CDMA-Funksender.

Zellulare Mobilfunksysteme der ersten Generation (Beispiele: AMPS (advanced mobile phone service), NMP (Nordic mobile telephone), TACS (total access communication system), C-Netz) konnten Sprache mit einer Datenrate von maximal 2 kbit/s übertragen und waren bis etwa 1992 im Einsatz. Mobilfunksysteme der zweiten Generation (beispielsweise das paneuropäische GSM (global system for mobile communications)) ermöglichen eine Übertragung von Sprache und Daten mit einer Datenrate von etwa 10 kbit/s. Derzeit wird weltweit an der Entwicklung von Funksendern/-empfängern für Mobilfunksysteme der dritten Generation, insbesondere UMTS (universal mobile telecommunication system), gearbeitet. Mobilfunksysteme der dritten Generation sind zur Übertragung von Multimedia (d.h. Sprache/Daten/Video) mit einer im Vergleich zur zweiten Generation wesentlich erhöhten maximalen Datenrate von etwa 2 Mbit/s vorgesehen.

Solche hohen Datenraten im Mbit/s-Bereich werden jedoch nicht ständig, sondern nur zeitweise (z.B. bei der gleichzeitigen Übertragung mehrerer Dienste oder für Video) benötigt. Bei UMTS ist es daher wünschenswert, Übertragungskapazität flexibel und bedarfsgerecht verwalten bzw. zuteilen zu können.

Mobilfunksysteme der dritten Generation verwenden als Vielfachzugriffsverfahren Codemultiplex (CDMA: code division multiple access). Beim CDMA wird das zu sendende Datensignal eines jeden Teilnehmers mit einem Teilnehmer-individuellen CDMA-Code codiert. Durch die unterschiedliche Codierung wird eine Teilnehmerseparierung ermöglicht.

Weitere bekannte Vielfachzugriffsverfahren sind Zeitmultiplex (TDMA: time division multiple access) und Frequenzmultiplex (FDMA: frequency division multiple access).

Beim TDMA-Verfahren wird die Übertragungszeit in aufeinanderfolgende TDMA-Rahmen unterteilt, und jedem Teilnehmer wird ein bestimmtes Teilintervall (Zeitschlitz) des TDMA-Rahmens zugeteilt. Nachteilig ist, daß jedem Teilnehmer nur wenig Sendezeit (nämlich ein Zeitschlitz pro TDMA-Rahmen) und damit nur eine relativ geringe Datenrate (bezogen auf die Gesamtübertragungszeit) zur Verfügung steht.

Beim FDMA-Verfahren wird die Gesamtübertragungsbandbreite in disjunkte Teilnehmerfrequenzbänder eingeteilt, und jedem Teilnehmer wird ein bestimmtes Frequenzband fest zugeteilt. Nachteilig ist die geringe Flexibilität des FDMA-Verfahrens bedingt durch die feste Frequenzband-Teilnehmer-Zuordnung.

In dem Artikel "A MAC-protocol supporting wireless video transmission over multi-code CDMA personal communication networks", He J. et al., Computer Communications, Band 21, Seiten 1256 bis 1268, 1998, ist ein Verfahren beschrieben, bei welchem ein Signal in mehrere Teildatensignale aufgespaltet und nachfolgend die Teildatensignale mit unterschiedlichen CDMA-Codes kodiert werden.

Der Erfindung liegt die Aufgabe zugrunde, ein Verfahren sowie eine Einrichtung zur Verarbeitung eines digitalen Datensignals in einem CDMA-Funksender zu schaffen, das bzw. die eine in Bezug auf die für die Übertragung benötigte Datenrate flexible und bedarfsgerechte Verarbeitung eines zu sendenden digitalen Datensignals in einem CDMA-Mobilfunksender ermöglicht.

Die der Erfindung zugrunde liegende Aufgabenstellung wird durch die Merkmale der Ansprüche 1 und 5 gelöst.

Demnach wird das zu sendende digitale Datensignal einem kombinierten TDMA/CDMA-Verarbeitungsverfahren unterzogen. Die Aufteilung des zu sendenden Datensignals in M Teilsignale ermöglicht dabei eine bedarfsgerechte (d.h. die momentan benötigte Datenrate der Quelle berücksichtigende) Verarbeitung der Daten, denn zur Übertragung einer erhöhten Datenrate muß lediglich die Anzahl M der Teildatensignale erhöht, d.h. zusätzliche "Kanäle" hinzugeschaltet werden. Ferner werden zumindest zwei der M Teildatensignale in unterschiedlichen Frequenzbereichen ausgesendet. Diesen beiden Teildatensignalen können dann auch identische CDMA-Codes aufgeprägt werden, da eine Unterscheidung der beiden Teildatensignale im Frequenzbereich möglich ist. Solche Kanäle (Frequenzkanäle) werden im folgenden auch als "physikalische" Kanäle bezeichnet.

Vorzugsweise werden den M Teildatensignalen paarweise unterschiedliche CDMA-Codes aufgeprägt. Die Teildatensignale können dann allein anhand der aufgeprägten unterschiedlichen CDMA-Codes eindeutig voneinander unterschieden (d.h. im Empfänger durch Decodieren der CDMA-Codes getrennt) werden. Mit anderen Worten wird in diesem Fall durch die CDMA-Codierung nicht "nur" eine Teilnehmerseparierung, sondern auch eine Kanalseparierung erreicht. Durch CDMA-Codierung erzeugte Kanäle werden im folgenden auch als "logische" Kanäle bezeichnet.

Zweckmäßigerweise wird jedes Teildatensignal mit einem Gewichtsfaktor multipliziert, welcher für jeden TDMA-Rahmen unterschiedlich sein kann. Durch Wahl eines geeigneten Gewichtsfaktors für jeden Rahmen können zeitliche Änderungen des Übertragungskanals (insbesondere dessen zeitvariante Dämpfung) kompensiert werden.

Im Falle einer Erhöhung der Anzahl M der Teildatensignale wird vorzugsweise einem hinzukommenden Teildatensignal ein CDMA-Code aufgeprägt, der eine minimale Korrelation mit den in dem bestimmten Zeitschlitz und Frequenzbereich verwendeten CDMA-Codes aller sendenden Teilnehmer (einer Funkzelle) aufweist. Dadurch wird erreicht, daß das hinzugekommene Teildatensignal mit demjenigen noch freien CDMA-Code kodiert wird, der bei der Decodierung im Empfänger die fehlerärmste Rekonstruktion des gesendeten Teildatensignals ermöglicht.

Die erfindungsgemäße Einrichtung ist entsprechend dem erfindungsgemäßen Verfahren als Mehrkanalsystem (M ≥ 2) gebildet, was - wie bereits erläutert - die bedarfsgerechte und flexible Bereitstellung von Übertragungskapazität durch Zuschaltung weiterer Kanäle ermöglicht, sobald eine höhere Übertragungskapazität benötigt wird.

Weitere vorteilhafte Ausgestaltungen der Erfindung sind in den Unteransprüchen angegeben.

Die Erfindung wird im folgenden anhand eines Ausführungsbeispiels unter Bezugnahme auf die Zeichnung erläutert; in dieser zeigt:
- Fig. 1: ein Blockschaltbild eines Mobilfunksenders zur allgemeinen Erläuterung der Signalverarbeitung in demselben;
- Fig. 2: ein Blockschaltbild der in Fig. 1 dargestellten Modulatoreinrichtung;
- Fig. 3: ein Schaltbild der in Fig. 2 dargestellten CDMA-Stufe für maximal vier logische Kanäle;
- Fig. 4A: eine schematische Darstellung zur Erläuterung der Rahmen- und Zeitschlitzstruktur bei der TDMA-Vielfachzugriffskomponente; und
- Fig. 4B: eine schematische Darstellung der Belegung der verfügbaren CDMA-Codes in einer Funkzelle zur Erläuterung der Kanalzuschaltung bei dem erfindungsgemäßen Verfahren.

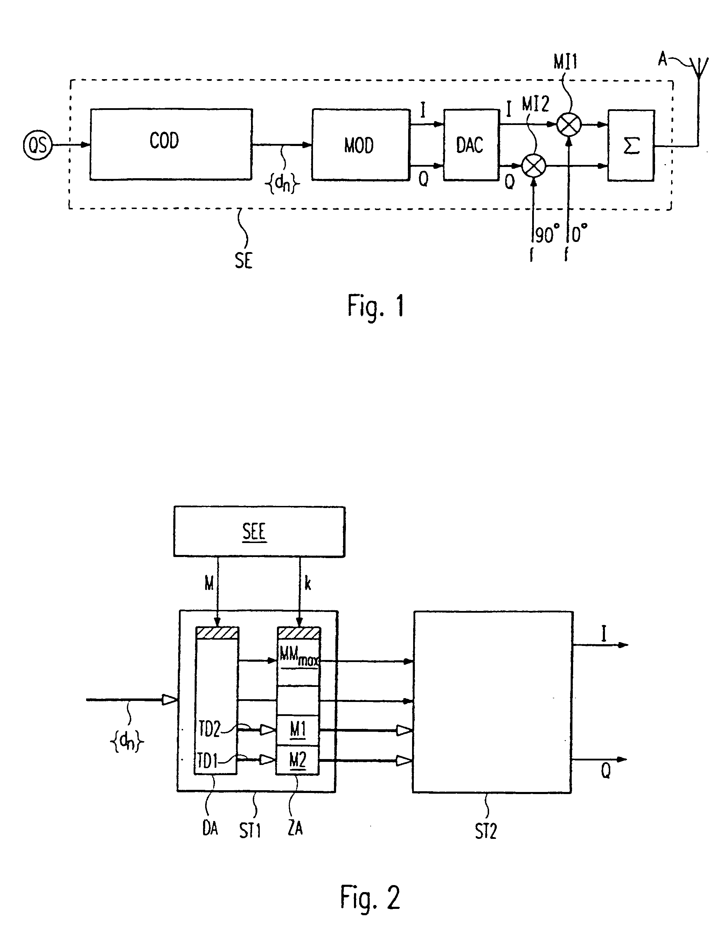

Fig. 1 zeigt die als solche bereits bekannte prinzipielle Struktur einer Sendeeinrichtung SE eines Funksenders, wie er in einer Basisstation oder einer Mobilstation eines Mobilfunksystems eingesetzt wird.

Die Sendeeinrichtung SE nimmt ein (beispielsweise durch ein Mikrofon oder Videokamera erzeugtes) analoges Quellensignal QS entgegen und führt dieses einem Codierer COD zu. Der Codierer COD umfaßt in nicht dargestellter Weise einen Analog-Digital-Umsetzer zur Digitalisierung des Quellensignals QS und kann ferner einen Quellencodierer, einen Kanalcodierer und einen Verschachteler enthalten, die das digitalisierte Quellensignal QS in geeigneter Weise Quellen-codieren, fehlerschutzcodieren und verschachteln.

Der Codierer COD gibt ein zu sendendes, binäres Datensignal aus, das aus einer Datenfolge {dₙ} der Datensymbole d₀, d₁, ... besteht. Die Datensymbole d₀, d₁, ... können beispielsweise dem Wertevorrat {-1, 1} entnommen sein.

Die Datenfolge {dₙ} wird einer Modulatoreinrichtung MOD zugeführt, die - wie im folgenden noch näher erläutert - jedes Datensymbol mit einem teilnehmerspezifischen CDMA-Code spreizcodiert und die Datenfolge für die Abstrahlung über einen hochfrequenten Träger spektral formt (d.h. moduliert).

Die Modulatoreinrichtung MOD nimmt ferner eine Aufteilung des Datensignals in einen Inphasal-(I)Zweig und einen Quadratur-(Q)Zweig vor. Die von der Modulatoreinrichtung MOD ausgegebenen I- und Q-Signalkomponenten werden einem Digital-Analog-Umsetzer DAC zugeführt, der entsprechende analoge I- und Q-Signalkomponenten erzeugt. Diese werden jeweils in Mischstufen MI1 bzw. MI2 mittels eines hochfrequenten Trägers der Frequenz f unter 90° Phasenversatz zueinander hochgemischt, überlagert und über eine Antenne A als Funksignal abgestrahlt.

Fig. 2 erläutert die in der Modulatoreinrichtung MOD implementierten Datenverarbeitungsabläufe.

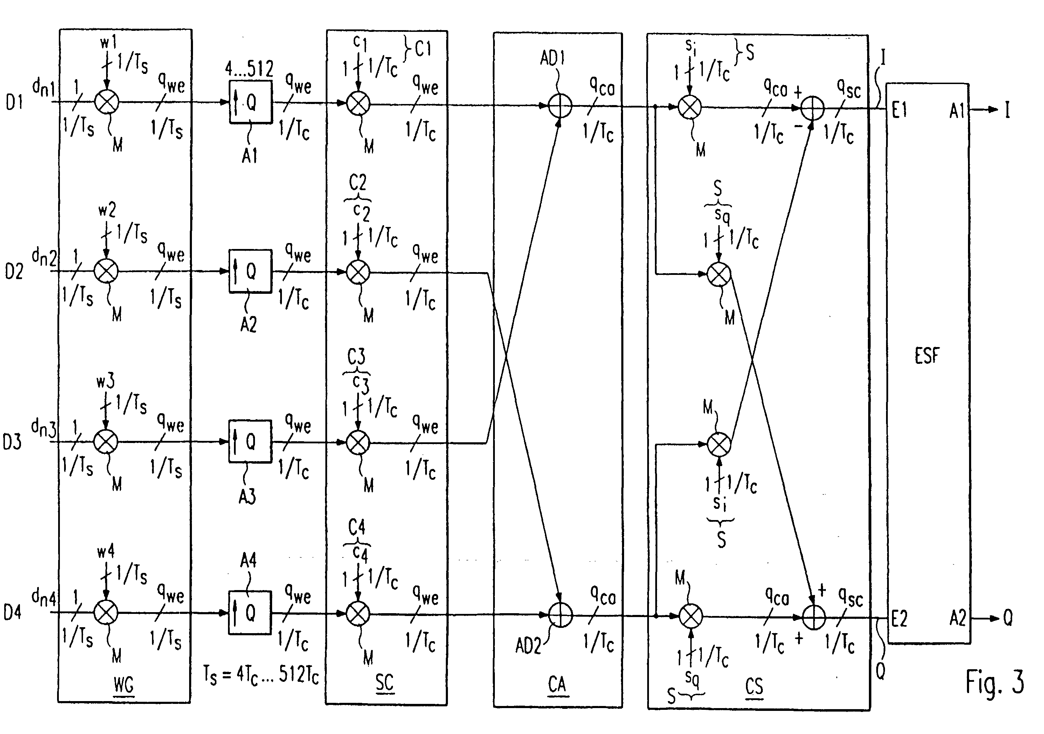

Die Modulatoreinrichtung MOD umfaßt eine erste Stufe ST1 (im folgenden auch als TDMA-Stufe bezeichnet) und eine zweite Stufe ST2 (im folgenden auch als CDMA-Stufe bezeichnet), wobei letztere in Fig. 3 noch näher erläutert wird.

Die TDMA-Stufe ST1 umfaßt eine Datensignal-Aufteilungseinrichtung DA und eine Zeitschlitz-Datenausgabeeinrichtung ZA.

Die Datensignal-Aufteilungseinrichtung DA nimmt das zu sendende digitale Datensignal in Form der Datenfolge {dₙ} entgegen und teilt das Datensignal in M unterschiedliche Teildatensignale TD1, TD2 (im dargestellten Beispiel ist M = 2) auf. Zu diesem Zweck wird der Datensignal-Aufteilungseinrichtung DA von einer Steuereinheit SEE die Anzahl M der benötigten Teildatensignale (Kanäle) mitgeteilt.

Die Anzahl M hängt von der Datenrate des zu sendenden Datensignals ab. Je höherratig das Datensignal, desto mehr Teildatensignale müssen zugeschaltet werden, d.h. desto größer wird M gewählt. Die Datensignal-Aufteilungseinrichtung DA kann beispielsweise maximal 16 Teildatensignale erzeugen, d.h. Mₘₐₓ = 16 (in Fig. 2 sind aus Gründen der einfacheren Erläuterung und Darstellung lediglich Mₘₐₓ = 4 maximal erzeugbare Teildatensignale gezeigt).

Die M = 2 Teildatensignale TD1, TD2 werden der Zeitschlitz-Datenausgabeeinrichtung ZA zugeführt. Die Zeitschlitz-Datenausgabeeinrichtung ZA umfaßt Mₘₐₓ Zwischenspeicher M1, M2, ..., MMₘₐₓ. Jeder Zwischenspeicher M1, M2, ..., MMₘₐₓ nimmt genau ein Teildatensignal TD1, TD2, ... entgegen und speichert die jeweils erhaltenen Datensymbole temporär.

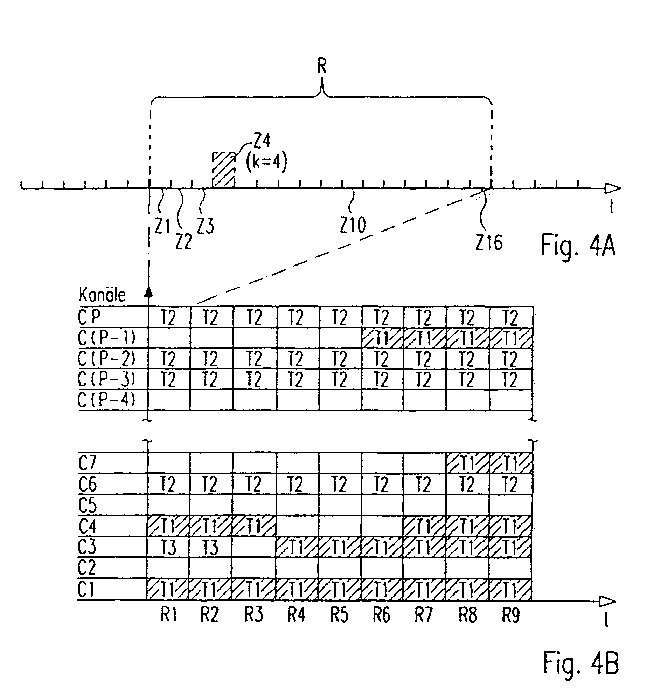

Die gespeicherten Datensymbole der Teildatensignale TD1, TD2 werden gleichzeitig während eines bestimmten, durch die ganze Zahl k indizierten Zeitschlitzes eines TDMA-Rahmens ausgegeben. Hierzu wird der Zeitschlitz-Datenausgabeeinrichtung ZA von der Steuereinheit SEE der Index k dieses bestimmten Zeitschlitzes mitgeteilt. Beispielsweise bedeutet k = 4, daß die Datenausgabe im 4-ten Zeitschlitz des gerade vorliegenden TDMA-Rahmens (welcher beispielsweise 16 Zeitschlitze enthält) erfolgt. Die zeitliche Struktur der im Signalweg hinter der Zeitschlitz-Datenausgabeeinrichtung ZA auftretenden Datensignale wird anhand von Fig. 4A noch näher erläutert.

Die Datensignal-Aufteilungseinrichtung DA kann beispielsweise ein Demultiplexer mit variabler Demultiplexiertiefe M sein. Die Zwischenspeicher M1, M2, ..., Mₘₐₓ der Zeitschlitz-Datenausgabeeinrichtung ZA können durch FIFO-Speicher realisiert sein. Die Zeitschlitz-Datenausgabeeinrichtung ZA kann im Signalweg auch vor der Datensignal-Aufteilungseinrichtung DA angeordnet sein.

Im Ergebnis stellt die Stufe ST1 eine variable Anzahl von M Teildatensignalen in einem bestimmten Zeitschlitz k einer TDMA-Rahmenstruktur der folgenden zweiten Stufe ST2 zur Verfügung. In der übrigen Zeit (d.h. außerhalb der Dauer des k-ten Zeitschlitzes) ist die zweite Stufe ST2 durch die erste Stufe ST1 deaktiviert.

Die zweite Stufe ST2 (CDMA-Stufe) wird anhand von Fig. 3 näher erläutert.

Die zweite Stufe ST2 weist vier (allgemein: Mₘₐₓ) Dateneingänge D1, D2, D3 und D4 auf und eignet sich somit zum gleichzeitigen Aufbau von maximal vier (allgemein: Mₘₐₓ) Kanälen.

Die an den Dateneingängen D1, D2, D3 und D4 anliegenden Teildatensignale TD1, TD2 und, sofern vorhanden (d.h. im Fall M = Mₘₐₓ), TD3 und TD4 werden durch die binären Datenfolgen {dₙ₁}, {dₙ₂}, {dₙ₃} und {dₙ₄} mit der Datensymbolrate 1/T_{S} repräsentiert. Dabei bezeichnet T_{S} die Zeitdauer eines einzelnen Datensymbols dₙ₁ (bzw. dₙ₂, dₙ₃, dₙ₄).

In einer (optionalen) Gewichtungseinheit WG werden die Datensymbole durch Multiplikation mit Gewichtsfaktoren w1, w2, w3 bzw. w4 im Datensymboltakt gewichtet. Hierzu weist die Gewichtungseinheit WG vier Multiplizierer M auf, die die Datensymbole dₙ₁ mit dem Gewichtsfaktor w1, die Datensymbole dₙ₂ mit dem Gewichtsfaktor w2, usw., multiplizieren. An den Ausgängen der Gewichtungseinheit WG bereitstehende Datensignale weisen eine Wortbreite q_{we} > 1 auf. Ihre Signalrate ist unverändert 1/T_{S}.

Die Gewichtsfaktoren w1, w2, w3, w4 ermöglichen eine Pegelanpassung des ausgesendeten Signals, d.h. sie können als "Lautstärken-Faktoren" aufgefaßt werden. In der Praxis werden die Kanäle häufig mit gleicher "Lautstärke" w (w=w1=w2=w3=w4) betrieben, wobei die "Lautstärke" w jedoch zeitlich variiert wird, d.h. w wird beispielsweise für jeden TDMA-Rahmen neu eingestellt. Dadurch kann eine zeitlich variable Dämpfung des Übertragungskanals berücksichtigt werden.

Ferner können durch Verwendung kanalweise unterschiedlicher Gewichtsfaktoren w1, w2, w3, w4 unterschiedliche Kanalenergien kompensiert werden, die beispielsweise bei der Verwendung kanalweise unterschiedlicher Spreizfaktoren Q auftreten.

Die gewichteten Datenfolgen {dₙ₁}, (dₙ₂), {dₙ₃} und {dₙ₄} werden von Abtaststufen A1, A2, A3, A4 in Überabtastung (Überabtastfaktor Q) abgetastet. Dadurch wird die Signalrate in jedem Signalweg von 1/T_{S} auf 1/T_{C} erhöht, wobei T_{C} die Chipzeitdauer bezeichnet, die die Zeitbasis für die spätere CDMA-Spreizcodierung darstellt. Es gilt T_{S}/T_{C} = Q. Der Überabtastfaktor Q wird daher auch als Spreizfaktor Q bezeichnet.

Er kann kanalweise unterschiedlich sein und zwischen 4 und 512 betragen, d.h. T_{S} = 4T_{C}...512T_{C}.

Bei einer UMTS-Sendeeinrichtung der dritten Mobilfunk-Generation beträgt die Signalrate 1/T_{C} am Ausgang der Abtaststufen A1, A2, A3, A4 3,84 x 10⁶ Abtastungen pro Sekunde.

Die Q-fach überabgetasteten Datensymbole dₙ₁, dₙ₂, dₙ₃, dₙ₄ werden dann in dem Spreizcodierer SC durch Aufprägen von teilnehmer- und kanalspezifischen digitalen Spreizcodefolgen spreizcodiert. Auf jedes von dem ersten Dateneingang D1 zugeführte Datensymbol dₙ₁ wird mittels eines Multiplizierers M eine erste Spreizcodefolge C1 bestehend aus Q digitalen Chips c₁ aufmultipliziert. Bezüglich der von den weiteren Dateneingängen D2, D3, D4 zugeführten Datensymbole dₙ₂, dₙ₃, dₙ₄ wird entsprechend verfahren. Durch Aufprägen der Spreizcodefolgen C1, C2, C3, C4 erhält jedes Datensymbol dₙ₁, dₙ₂, dₙ₃, dₙ₄ gleichsam einen "Fingerabdruck" sowohl des sendenden Teilnehmers als auch des entsprechenden Kanals. Am Ausgang des Spreizcodierers SC stehen die spreizcodierten Teildatensignale mit einer Signalrate von 1/T_{C} - d.h. der Chiprate - und einer (unveränderten) Wortbreite von q_{we} bereit.

Durch CDMA-Codierung "erzeugte" (d.h. unterscheidbar gemachte) Kanäle werden wie bereits erwähnt als logische Kanäle bezeichnet.

In optionaler Weise können anstelle eines oder mehrerer logischer Kanäle auch physikalische Kanäle eingesetzt werden. Beispielsweise sei angenommen, daß die CDMA-Codefolgen C1 und C2 identisch sind. In diesem Fall ermöglicht die Spreizcodierung immer noch eine Teilnehmerseparierung. Eine Kanalseparierung ist jedoch nicht mehr möglich. Diese kann aber erreicht werden, indem hinter den Abtaststufen A1, A2, A3, A4 und vor dem noch zu erläuternden Kanaladdierer CA eine weitere, optionale Stufe (nicht dargestellt) mit zu dem Spreizcodierer SC identischen Aufbau integriert ist. Mittels der Multiplizierer dieser Stufe werden auf die Teildatensignale (im beschriebenen Beispiel: der Dateneingänge D1 und D2) jeweils eine schmalbandige Frequenzverschiebungsfolge F1 bzw. F2 aufmultipliziert. Die Frequenzverschiebungsfolgen F1 und F2 bewirken, daß die Teildatensignale der Dateneingänge D1 und D2 bei der späteren Abstrahlung in einem unterschiedlichen Frequenzbereich liegen und dadurch in einem Empfänger voneinander getrennt werden können. Mit anderen Worten wird in diesem Fall die Teilnehmerseparierung (weiterhin) durch eine CDMA-Komponente gewährleistet, während die Kanalseparierung (zumindest für zwei Kanäle, hier D1, D2) durch eine FDMA-Komponente (d.h. die Erzeugung von physikalischen Kanälen) erreicht wird.

Im Signalweg hinter dem Spreizcodierer SC befindet sich ein Kanaladdierer CA. Der Kanaladdierer CA umfaßt zwei im Chiptakt arbeitende Addierer AD1, AD2. Der Addierer AD1 addiert die von den Dateneingängen D1, D3 stammenden Teildatensignale und der Addierer AD2 addiert die von den Dateneingängen D2 und D4 stammenden Teildatensignale. An den beiden Ausgängen des Kanaladdierers CA liegen Datensignale mit einer Signalrate von 1/T_{C} und einer gegebenenfalls erhöhten Wortbreite von q_{ca} vor.

Bei mehr als Mₘₐₓ = 4 Kanälen muß der Kanaladdierer CA entsprechend mehr Addiereingänge aufweisen.

Ein komplexer Verwürfler CS dient zum Aufprägen einer komplexwertigen Verwürfelungs-Codefolge S auf die Datensignale. Zu diesem Zweck werden die von dem Kanaladdierer CA ausgegebenen Datensignale in der dargestellten Weise mit den Real- bzw. Imaginärteilen s_{q} bzw. sᵢ der Elemente der komplexwertigen Verwürfelungs-Codefolge S multipliziert und nachfolgend wie gezeigt kreuzweise addiert. Die Verwürfelungs-Codefolge S ist eine Basisstations-Kennung. Befindet sich die Sendeeinrichtung SE in einer Basisstation, so bezeichnet die Verwürfelungs-Codefolge S diese Basisstation. Andernfalls (Sendeeinrichtung SE befindet sich in der Mobilstation) bezeichnet die Verwürfelungs-Codefolge S die empfangende Basisstation.

Ferner dient der komplexe Verwürfler CS zur Erzeugung der I-und Q-Signalkomponenten des Sendesignals, die am Ausgang des komplexen Verwürflers CS mit einer Signalrate von 1/T_{C} und einer Wortbreite von q_{sc} zur Verfügung stehen.

Diese beiden Signalkomponenten werden einer Einrichtung zur spektralen Signalformung ESF an ihren Eingängen E1, E2 zugeführt. An ihren Ausgängen A1, A2 stellt die Einrichtung zur spektralen Signalformung ESF die spektral geformten (d.h. modulierten) I- bzw. Q-Signalkomponenten mit einer 4-fach erhöhten Signalrate bereit.

Die Einrichtung zur spektralen Signalformung ESF ist im wesentlichen ein digitales Filter, und die zur Signalformung verwendete spektrale Filterfunktion kann beispielsweise eine RRC-(root raised cosine)Funktion sein. Eine solche Filterschaltung wird als RRC-Filterschaltung bezeichnet. Die RRC-Funktion ist durch den funktionalen Zusammenhang (1 + cos x)^{1/2}/2^{1/2} im Bereich 0 ≤ x ≤ π definiert, welcher den Verlauf der Filterflanke im Spektralbereich wiedergibt.

Der Einrichtung zur spektralen Signalformung ESF kann eine Frequenzkorrektureinrichtung (nicht dargestellt) nachgeschaltet sein. Die Frequenzkorrektureinrichtung ist konstruktiv identisch mit dem komplexen Verwürfler CS und unterscheidet sich von letzterem lediglich dadurch, daß anstelle der reellund imaginärwertigen Elemente s_{q} bzw. sᵢ der komplexwertigen Verwürfelungs-Codefolge S die reel- und imaginärwertige Elemente einer Frequenzkorrekturfolge F (bei einer 4-fach erhöhten Signalrate) auf den I- und Q-Zweig aufmultipliziert werden. Mittels der Frequenzkorrekturfolge F wird eine gezielte spektrale Verschiebung des digitalen Sendesignals zur Kompensation einer unerwünschten Frequenzverstimmung zwischen Empfänger und Sender (beispielsweise aufgrund von Oszillatordrifts, Dopplereffekten, usw.) bewirkt.

In Fig. 4A ist die zeitliche Struktur sämtlicher Datensignale im Signalweg hinter der ersten Stufe ST1 über der Übertragungszeit t dargestellt. Die Übertragungszeit t ist in aufeinanderfolgende, disjunkte TDMA-Rahmen unterteilt, von denen ein TDMA-Rahmen R in Fig. 4A dargestellt ist. Jeder TDMA-Rahmen R ist wiederum in 16 aufeinanderfolgende, disjunkte Zeitschlitze Z1, Z2, ..., Z16 unterteilt.

Bei dem in Fig. 4A dargestellten Beispiel ist k = 4. Das heißt, daß die betrachtete Sendeeinrichtung SE in dem vierten Zeitschlitz Z4 des TDMA-Rahmens R aktiv ist.

Bei leitungsvermittelten Diensten ist k konstant, d.h. die Sendeeinrichtung SE verwendet in aufeinanderfolgenden TDMA-Rahmen R immer den gleichen aktiven Zeitschlitz. Bei paketvermittelnden Diensten muß dies aber nicht der Fall sein, d.h. der aktive Zeitschlitz k kann von einem TDMA-Rahmen R zum anderen TDMA-Rahmen R variieren.

Die Zeitschlitze Z1, Z2, ..., Z16 müssen nicht zusammenhängend sein, sondern können durch Totzeiten zeitlich separiert sein.

Fig. 4B zeigt eine schematische Darstellung zur Erläuterung der Funktionsweise der erfindungsgemäßen Sendeeinrichtung SE. Über der Übertragungszeit t sind die in einer Funkzelle verfügbaren logischen Kanäle aufgetragen. Die Gesamtanzahl P der logischen Kanäle ist gleich der Anzahl der insgesamt verfügbaren CDMA-Codes C1, C2, ..., CP. (Die in UMTS vereinbarten CDMA-Codes C1, C2, ..., CP werden aufgrund ihres variablen Spreizfaktors auch als OVSF-(orthogonal variable spreading factor) Codes bezeichnet.)

Es werde im folgenden angenommen, daß der Teilnehmer T1 der Nutzer der vorstehend beschriebenen Sendeeinrichtung SE ist, die im k-ten Zeitschlitz eines Rahmens aktiv ist. In einem ersten TDMA-Rahmen R1 verwendet der Teilnehmer T1 die CDMA-Codes C1 und C4, ein im gleichen Zeitschlitz aktiver Teilnehmer T2 verwendet die CDMA-Codes C6, C(P-3) C(P-2) und CP und ein ebenfalls im gleichen Zeitschlitz aktiver dritter Teilnehmer T3 benutzt den CDMA-Code C3. In Fig. 4B ist die Codebelegung des Teilnehmers T1 zusätzlich durch Schraffur verdeutlicht.

Die Belegung der verfügbaren CDMA-Codes in einer Funkzelle durch die aktiven Teilnehmer T1, T2, T3 sowie M und k jedes Teilnehmers sind der die Funkzelle überwachenden Basisstation zu jedem Zeitpunkt bekannt. In der Praxis wird die Vergabe der einzelnen CDMA-Codes zwischen der Basisstation und den aktiven Teilnehmern T1, T2, T3 (Mobilstationen) ausgehandelt.

Die Codebelegung in dem TDMA-Rahmen R2 ist identisch mit der Codebelegung in dem vorhergehenden TDMA-Rahmen R1.

In dem betrachteten k-ten Zeitschlitz des TDMA-Rahmens R3 ist der Teilnehmer T3 nicht mehr vertreten, d.h. der CDMA-Code C3 ist frei geworden.

Bei einer Änderung der Code-Belegung kann aus Gründen einer leistungsfähigeren Kanal-Separierung eine Umverteilung der benutzten/freien CDMA-Codes C1, C2, ..., CP vorteilhaft sein. Aus diesem Grund wechselt der Teilnehmer T1 von dem CDMA-Code C4 in den CDMA-Code C3 (siehe TDMA-Rahmen R4 und R5).

Am Ende des TDMA-Rahmens R5 benötigt der Teilnehmer T1 eine höhere Übertragungskapazität, beispielsweise weil ein zusätzlicher Dienst übertragen werden soll. In Abstimmung mit der Basisstation wird dem Teilnehmer T1 zu diesem Zweck zunächst der zusätzliche Kanal C(P-1) zugeteilt, (siehe TDMA-Rahmen R6) und in den nächsten Rahmen R7 und R8 werden ihm die weiteren Kanäle C4 und C7 zugeteilt. Die Auswahl der zugeschalteten Kanäle C(P-1), C4, C7 kann in Absprache mit der Basisstation so erfolgen, daß innerhalb des hier betrachteten k-ten Zeitschlitzes eine optimale Teilnehmer- und Kanalseparation ermöglicht wird, d.h. daß die verwendeten CDMA-Codes unter Berücksichtigung ihrer unterschiedlichen spektralen Eigenschaften ausgewählt werden.

Die Kanalbelegung in dem TDMA-Rahmen R9 ist identisch mit der Kanalbelegung in R8.

Anstelle der anhand von Fig. 4B erläuterten Zuschaltung von logischen Kanälen bei Erhöhung des Übertragungsratenbedarfs kann auch eine Zuschaltung von physikalischen Kanälen unter Verwendung von den zuvor erläuterten Frequenzverschiebungsfolgen F1, F2 vorgesehen sein.

## Patentansprüche

1. Verfahren zur Verarbeiten eines zu sendenden digitalen Datensignals in einem CDMA-Mobilfunksender, bei welchem
- das zu sendende Datensignal mittels einer Datensignal-Aufteilungseinrichtung (DA) in eine vorgebbare Anzahl M von Teildatensignalen (TD1, TD2, ..., TDM) aufteilt wird, wobei M eine ganze Zahl größer oder gleich 2 ist, und mittels einer Zeitschlitz-Datenausgabeeinrichtung (ZA) in einem bestimmten Zeitschlitz (Z4) eines aus einer Mehrzahl von Zeitschlitzen aufgebauten TDMA-Rahmens (R) ausgegeben wird, und
- bei welchem mittels einer Kanalisierungseinrichtung (ST2) jedem in dem bestimmten Zeitschlitz ausgegebenen Teildatensignal ein vorgebbarer CDMA-Code (C1, ..., CM) aufgeprägt wird, und
- zumindest zwei der M Teildatensignale (TD1, TD2, ..., TDM) durch Aufmultiplizieren einer schmalbandigen Frequenzverschiebungsfolge auf mindestens ein Teildatensignal in unterschiedlichen Frequenzbereichen ausgesendet werden.

2. Verfahren nach Anspruch 1,
**dadurch gekennzeichnet,**
- **daß** den M Teildatensignalen (TD1, TD2, ..., TDM) paarweise unterschiedliche CDMA-Codes (C1, ..., CM) aufgeprägt werden.

3. Verfahren nach Anspruch 1 oder 2,
**dadurch gekennzeichnet,**
- **daß** jedes Teildatensignal (TD1, TD2, ..., TDM) mit einem Gewichtsfaktor (w1, w2, w3, w4) multipliziert wird, welcher für jeden TDMA-Rahmen (R) unterschiedlich sein kann.

4. Verfahren nach einem der vorhergehenden Ansprüche,
**dadurch gekennzeichnet,**
- **daß** im Falle einer Erhöhung der Anzahl M einem hinzukommenden Teildatensignal (TD1, TD2, ..., TDM) ein CDMA-Code (CM+1) aufgeprägt wird, der eine minimale Korrelation mit den in dem bestimmten Zeitschlitz (Z4) und Frequenzbereich verwendeten CDMA-Codes aller sendenden Teilnehmer (T1, T2, T3) aufweist.

5. Einrichtung zur Verarbeiten eines zu sendenden digitalen Datensignals in einem CDMA-Mobilfunksender,
- mit einer Datensignal-Aufteilungseinrichtung (DA), die das zu sendende Datensignal in M Teildatensignale (TD1, TD2, ..., TDM) aufteilt, wobei M eine ganze Zahl größer oder gleich 2 ist, und einer Zeitschlitz-Datenausgabeeinrichtung (ZA), die das zu sendende Datensignal in einem bestimmten Zeitschlitz (Z4) eines aus einer Mehrzahl von Zeitschlitzen aufgebauten TDMA-Rahmens (R) ausgibt, und
- mit einer Kanalisierungseinrichtung (ST2), die einen ersten Satz Multiplizierer (M) umfaßt, mittels welchem jedem in dem bestimmten Zeitschlitz (Z4) ausgegebenen Teildatensignal ein vorgebbarer CDMA-Code (C1, C2, ..., CM) aufmultipliert wird, und die einen zweiten Satz Multiplizierer umfaßt, mittels welchem auf wenigstens ein Teildatensignal (TD1, TD2, ..., TDM) eine schmalbandige Frequenzverschiebungsfolge (F1, F2) aufmultipliziert wird.

6. Einrichtung nach Anspruch 5,
**dadurch gekennzeichnet,**
- **daß** die Kanalisierungseinrichtung (ST2) auf die M Teildatensignale (TD1, TD2, ..., TDM) paarweise unterschiedliche CDMA-Codes (C1, ..., CM) aufmultipliziert.

7. Einrichtung nach einem der Ansprüche 5 oder 6,
**dadurch gekennzeichnet,**
- **daß** im Signalweg hinter der Datensignal-Aufteilungseinrichtung (DA) eine Gewichtungseinrichtung (WG) vorgesehen ist, welche jedes Datensymbol eines Teildatensignals (TD1, TD2, ..., TDM) mit einem Gewichtsfaktor (w1, w2, w3, w4) multipliziert.

8. Einrichtung nach Anspruch 7,
**dadurch gekennzeichnet,**
- **daß** die Wahl des Gewichtsfaktors in Abhängigkeit von der TDMA-Rahmenstruktur getroffen wird.

## Claims

1. Method for processing a digital data signal to be transmitted in a CDMA mobile radio transmitter, in which
- the data signal to be transmitted is split by means of a data signal splitting device (DA) into a prescribable number M of subsidiary data signals (TD1, TD2, ..., TDM) , where M is an integer greater than or equal to 2, and is output by means of a timeslot data output device (ZA) in a particular timeslot (Z4) of a TDMA frame (R) made up of a plurality of timeslots, and
- in which a channelling device (ST2) is used to impress a prescribable CDMA code (C1, ..., CM) onto each subsidiary data signal which is output in the particular timeslot, and
- at least two of the M subsidiary data signals (TD1, TD2, ..., TDM) are transmitted in different frequency ranges by multiplying a narrowband frequency shift sequence onto at least one subsidiary data signal:

2. Method according to Claim 1,
**characterized**
- **in that** different CDMA codes (C1, ..., CM) are impressed in pairs onto the M subsidiary data signals (TD1, TD2, ..., TDM).

3. Method according to Claim 1 or 2,
**characterized**
- **in that** each subsidiary data signal (TD1, TD2, ..., TDM) is multiplied by a weighting factor (w1, w2, w3, w4) which can be different for each TDMA frame (R).

4. Method according to one of the preceding claims,
**characterized**
- **in that** in the event of an increase in the number M, a CDMA code which has a minimal correlation to the CDMA codes used in the particular timeslot (Z4) and frequency range for all the transmitting subscribers (T1, T2, T3) is impressed onto a subsidiary data signal (TD1, TD2, ..., TDM) which is being added.

5. Device for processing a digital data signal to be transmitted in a CDMA mobile radio transmitter,
- having a data signal splitting device (DA) which splits the data signal which is to be transmitted into M subsidiary data signals (TD1, TD2, ..., TDM), where M is an integer greater than or equal to 2, and a timeslot data output device (ZA) which outputs the data signal to be transmitted in a particular timeslot (Z4) of a TDMA frame (R) made up of a plurality of timeslots, and
- having a channelling device (ST2) which comprises a first set of multipliers (M) which is used to multiply a prescribable CDMA code (C1, C2, ..., CM) onto each subsidiary data signal which is output in the particular timeslot (Z4), and which channelling device comprises a second set of multipliers which is used to multiply a narrowband frequency shift sequence (F1, F2) onto at least one subsidiary data signal (TD1, TD2, ... TDM).

6. Device according to Claim 5,
**characterized**
- **in that** the channelling device (ST2) multiplies different CDMA codes (C1, ..., CM) in pairs onto the M subsidiary data signals (TD1, TD2, ..., TDM).

7. Device according to one of Claims 5 or 6,
**characterized**
- **in that** the signal path downstream of the data signal splitting device (DA) contains a weighting device (WG) which multiplies each data symbol in a subsidiary data signal (TD1, TD2, ..., TDM) by a weighting factor (w1, w2, w3, w4).

8. Device according to Claim 7,
**characterized**
- **in that** the choice of weighting factor is made on the basis of the TDMA frame structure.

## Revendications

1. Procédé pour le traitement d'un signal de données numériques à émettre dans un émetteur de radiocommunication mobile CDMA, dans lequel
- on divise le signal de données à émettre au moyen d'un dispositif diviseur de signal de données (DA) en un nombre pouvant être prescrit M de sous-signaux de données (TD1, TD2, ..., TDM), M étant un nombre entier supérieur ou égal à 2, et on le délivre au moyen d'un dispositif de sortie de données à créneau temporel (ZA) dans un créneau temporel déterminé (Z4) d'une trame TDMA (R) construite à partir d'une multiplicité de créneaux temporels, et
- au moyen d'un dispositif de canalisation (ST2), on applique un code CDMA pouvant être prescrit (C1, ..., CM) à chaque sous-signal de données sorti dans le créneau temporel déterminé, et
- on émet au moins deux des M sous-signaux de données (TD1, TD2, ..., TDM), par multiplication d'une séquence de décalage de fréquence à bande étroite sur au moins un sous-signal de données, dans différentes plages fréquentielles.

2. Procédé selon la revendication 1,
**caractérisé par le fait qu'**on applique par paire différents codes CDMA (C1, ..., CM) aux M sous-signaux de données (TD1, TD2, ..., TDM).

3. Procédé selon la revendication 1 ou 2,
**caractérisé par le fait qu'**on multiplie chaque sous-signal de données (TD1, TD2, ..., TDM) par un facteur de pondération (w1, w2, w3, w4) qui peut être différent pour chaque trame TDMA (R).

4. Procédé selon l'une des revendications précédentes,
**caractérisé par le fait que**, dans le cas d'une augmentation du nombre M, on applique à un sous-signal de données venant s'ajouter (TD1, TD2, ..., TDM) un code CDMA (CM + 1) qui présente une corrélation minimale avec les codes CDMA, utilisés dans le créneau temporel déterminé (Z4) et dans la plage fréquentielle déterminée, de tous les abonnés émetteurs (T1, T2, T3).

5. Dispositif pour le traitement d'un signal de données numériques à émettre dans un émetteur de radiocommunication mobile CDMA,
- avec un dispositif diviseur de signal de données (DA) qui divise le signal de données à émettre en M sous-signaux de données (TD1, TD2, ..., TDM), M étant un nombre entier supérieur ou égal à 2, et avec un dispositif de sortie de données à créneau temporel (ZA) qui délivre le signal de données à émettre dans un créneau temporel déterminé (Z4) d'une trame TDMA (R) construite à partir d'une multiplicité de créneaux temporels, et
- avec un dispositif de canalisation (ST2) qui comprend un premier ensemble de multiplieurs (M) au moyen duquel un code CDMA pouvant être prescrit (C1, C2, ..., CM) est multiplié sur chaque sous-signal de données sorti dans le créneau temporel déterminé (Z4) et un deuxième ensemble de multiplieurs au moyen duquel une séquence de décalage de fréquence à bande étroite (F1, F2) est multipliée sur au moins un sous-signal de données (TD1, TD2, ..., TDM).

6. Dispositif selon la revendication 5,
**caractérisé par le fait que** le dispositif de canalisation (ST2) multiplie différents codes CDMA (C1, ..., CM) par paire sur les M sous-signaux de données (TD1, TD2, ..., TDM).

7. Dispositif selon l'une des revendications 5 ou 6,
**caractérisé par le fait que**, dans le trajet du signal derrière le dispositif diviseur de signal de données (DA), il est prévu un dispositif de pondération (WG) qui multiplie chaque symbole de données d'un sous-signal de données (TD1, TD2, ..., TDM) par un facteur de pondération (w1, w2, w3, w4).

8. Dispositif selon la revendication 7,
**caractérisé par le fait que** le choix du facteur de pondération est effectué en fonction de la structure de trame TDMA.
